# EUROPÄISCHE PATENTANMELDUNG

(11) **EP 0 585 706 A1**
(43) Veröffentlichungstag der Anmeldung: **09.03.1994**
(21) Anmeldenummer: 93113080.1
(22) Anmeldetag: 16.08.1993
(51) Int. Cl.: C08G 59/14, C08F 299/00, C09D 163/10

(54) **Epoxidharz mit (Meth)Acrylgruppen**

(30) Priorität: 26.08.1992 DE 4228293
(71) Anmelder: HOECHST AKTIENGESELLSCHAFT, D-65926 Frankfurt am Main (DE)
(72) Erfinder: Brindöpke, Gerhard, Dr., D-65843 Sulzbach (DE); Kurth, Inge, D-65193 Wiesbaden (DE)

(57) **Zusammenfassung**

Epoxidharz mit (Meth)Acrylgruppen, erhalten durch Umsetzung eines Glycidylethers des 1,4-Cyclohexandimethanols der Formel 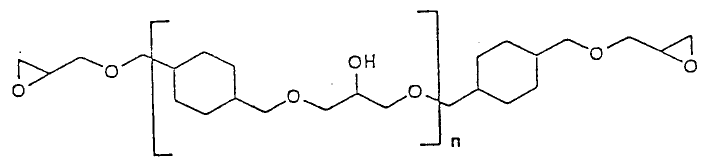
worin n eine Zahl von 0 bis 10 bedeutet, mit Acryl- oder Methacrylsäure, gegebenenfalls zusammen mit einer weiteren Monocarbonsäure.
Diese Epoxidharze zeichnen sich aus durch eine gute Haftung, Elastizität und Gilbungsfestigkeit.

## Beschreibung

Es ist bekannt, daß Überzugsmassen, die als Bindemittel Acrylatgruppen tragende Präpolymere enthalten, durch energiereiche Strahlung wie UV-Licht oder Elektronenstrahlung oder durch Erhitzen in Gegenwart oder Abwesenheit von Radikalbildnern gehärtet werden können und dabei Überzüge mit guter Haftung, glatter Oberfläche und guter Abrieb- und Schlagfestigkeit ergeben.

In "UV&EB CURING FORMULATION for PRINTING INKS COATING & PAINTS Edited by Dr. R. Holman & Dr. P. Oldring ISBN 0 947798 02 1" wird die Herstellung und die Verwendung von Epoxidacrylaten in UV- oder Elektronenstrahlhärtbaren Systemen beschrieben. Ausgangsprodukte für diese Epoxidacrylate sind Diglycidylether des Bisphenol A, Novolakglycidylether, epoxidierte Soya- oder Leinöle oder Monoglycidylether oder -ester wie z.B. Butylglycidylether oder Cadura E 10. Daneben ist dem Fachmann aus einschlägigen, im Handel erhältlichen Produkten bekannt, daß sich auch aliphatische Di- oder Triglycidylether wie z.B. Hexandioldiglycidylether oder Neopentylglykoldiglycidylether als Ausgangsprodukte für die Herstellung der Epoxidacrylate eignen.

Die aromatischen Epoxidacrylate wie z.B. die Umsetzungsprodukte von Bisphenol A oder Novolakglycidylether mit Acrylsäure zeichnen sich durch gute Haftung, Elastizität und gute Chemikalienfestigkeit aus.

Nachteilig und für vielerlei Anwendung störend ist ihre Neigung, unter Einwirkung von Licht zu gilben oder zu kreiden, was zu einer Mattigkeit des Lackfilmes führt. Eine Verbesserung dieser Eigenschaften gelingt durch die Verwendung von aliphatischen oder cycloaliphatischen Diglycidylethern als Ausgangsstoffe für die Herstellung von Epoxidacrylaten. Mit diesem Wechsel muß man allerdings Einbußen bei der Chemikalienfestigkeit oder bei der Kratzbeständigkeit hinnehmen.

Der Erfindung lag daher die Aufgabe zugrunde, härtbare Bindemittel bereitzustellen, die nach Härtung gleich gute Haftungs-, Elastizitäts- und Beständigkeitseigenschaften aufweisen wie aromatische Epoxyacrylate, die aber außerdem wie die aliphatischen Epoxidacrylate unter Bewitterungseinfluß weniger stark gilben.

Es wurde nun gefunden, daß diese Aufgabe gelöst wird, wenn bei der Herstellung von Epoxid-(meth-)acrylaten von Glycidylethern des 1,4-Cyclohexandimethanols ausgegangen wird.

Gegenstand der Erfindung sind somit Epoxidharze mit (Meth)Acrylgruppen, die erhalten werden durch Umsetzung eines Glycidylethers des 1,4-Cyclohexandimethanols der Formel 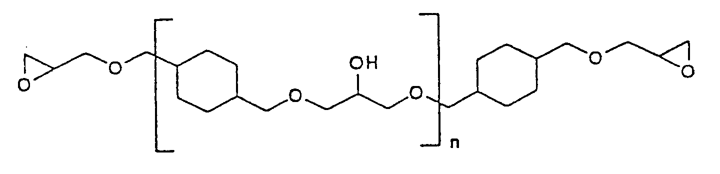
worin n eine Zahl von 0 bis 10 bedeutet, mit Acryl- oder Methacrylsäure, gegebenenfalls zusammen mit einer weiteren Monocarbonsäure.

Diese Epoxidharze weisen Gehalte an olefinischen Doppelbindungen (berechnet als =C=C=, Molekulargewicht = 24) von mindestens 2 % auf.

Die Produkte werden hergestellt durch Umsetzung des Diglycidylethers der oben angegebenen Formel mit einem Mindestepoxidgehalt (berechnet als aktiver Sauerstoff, Molekulargewicht = 16) von 1,4 % mit Acryl- und/oder Methacrylsäure, gegebenenfalls zusammen mit einer weiteren Monocarbonsäure, in Gegenwart oder Abwesenheit eines Katalysators und gegebenenfalls in Gegenwart eines Inhibitors, der die Polymerisation unterdrückt. Das Equivalentverhältnis der Ausgangskomponenten, jeweils bezogen auf die Summe der Epoxidgruppen und die Summe der Säuregruppen, beträgt 1:0,4 bis 1:1,2, vorzugsweise 1:0,8 bis 1:1.

Die Acrylsäure bzw. Methacrylsäure kann auch teilweise durch eine Mono- oder Dicarbonsäure ersetzt werden. Geeignete Mono- oder Dicarbonsäuren sind beispielsweise aliphatische oder aromatische Säuren wie Essigsäure, Buttersäure, Laurinsäure, Maleinsäure, Adipinsäure, Tetrahydrophthalsäure-(anhydrid), Phthalsäure-(anhydrid), Stearinsäure, Ethylhexansäure, Rizinenfettsäure, Benzoesäure. Diese Monocarbonsäuren können bis zu 40 Mol%, vorzugsweise bis zu 20 Mol%, bezogen auf die (Meth)Acrylsäure, ausmachen.

Als Ausgangsepoxide werden vorzugsweise die technischen, im Handel erhältlichen Diglycidylether des Cyclohexandimethanols eingesetzt. Diese Produkte sind erhältlich unter der Bezeichnung EUREPOX® RV-C (Handelsprodukt der Fa. SCHERING AG Berlin/Bergkamen) oder als EPODIL® 757 der FA. ANCHOR CHEMICAL (UK) Ltd. Manchester. Die bevorzugten Produkte weisen Epoxidgehalte von 8-11 % auf.

In der Regel kann man die Reaktion in Gegenwart eines inerten Lösungsmittels wie z.B. Toluol, Xylol oder Aceton oder in Gegenwart eines doppelbindungshaltigen Verdünnungsmittels wie z.B. Hexandioldiacrylat oder Dipropylenglykoldiacrylat durchführen. Für den Großteil der Anwendungen ist es oft ratsam, auf eine Mitverwendung des Lösungsmittels zu verzichten, um lösungsmittelfreie Systeme zu erzeugen.

Als Katalysatoren für die Umsetzung kommen alle dem Fachmann bekannten und für diese Art von Reaktion verwendbaren Katalysatoren in Frage. Besonders geeignet sind Triphenylphosphin, ein im Handel unter der Bezeichnung Cordova Accelerator-II bekanntes Chromoktoat und Triethylamin.

Um eine unerwünschte, vorzeitige Polymerisation der ungesättigten Gruppen zu vermeiden, werden, vorteilhaft bereits bei der Herstellung des Epoxidacrylates, Polymerisationsinhibitoren zugesetzt. Hierfür sind beispielsweise Chinone, Phenole oder Phenolderivate, wie p-Benzochinon, Hydrochinon, p-Methoxyphenol u.a. Verbindungen geeignet, wie sie z.B. beschrieben sind in "Encyclopedia of Polymer Science and Technology", Vol. 7, 1967, S. 644-664, Editors: Mark, Gaylord and Bikales, Interscience Publishers, Wiley and Sons, New York.

Die so erhaltenden Bindemittel lassen sich sehr gut radikalisch oder durch UV-Licht oder durch Bestrahlen mit freien Elektronen härten; es ergeben sich so Beschichtungen mit guter Beständigkeit, hoher Elastizität und Gilbungsfestigkeit. Die erfindungsgemäßen Bindemittel können allein oder in Verbindung mit anderen Bindemitteln oder nach Verdünnung mit reaktiven niedrigviskosen Oligomeren (sogenannte Reaktiwerdünner) in Lacken eingesetzt werden.

Diese reaktiven Verdünner z.B. Hexandioldiacrylat, Trimethylolpropantriacrylat in freier oder oxethylierter oder oxpropylierter Form oder N-Vinylpyrrolidon können in Mengen von 0-80 Gew.-%, vorzugsweise 0-60 Gew.-%, bezogen auf die Überzugsmasse, angewandt werden.

Es ist auch möglich, aus diesen Bindemitteln mit Hilfe von geeigneten Emulgatoren, wie sie z.B. in der DE 39 00 257 oder US 4 070 323 beschrieben worden sind, wäßrige Dispersionen herzustellen, die wertvolle Rohstoffe für wäßrige Lacke darstellen.

Die erfindungsgemäßen Bindemittel bzw. Überzugsmassen mit einem Gehalt an diesen Bindemitteln können zum Lackieren von Substraten, wie Holz, Glas, Metall, Textilien, Papier oder Kunststoffen verwendet werden. Daneben können sie aber auch mit anderen Materialien wie z.B. Kunststoffen wie Polyethylen, Polypropylen, Polyamid, Polyvinylchlorid oder Phenol-Formaldehyd Kondensaten verpresst und thermisch ausgehärtet werden.

Die Härtung der Bindemittel kann entweder durch Erhitzen auf Temperaturen von 130-220 °C, vorzugsweise 150-190 °C, oder durch die Einwirkung von energiereicher Strahlung wie UV- oder Elektronenstrahlen erfolgen.

Im Falle der Vernetzung mittels UV-Bestrahlung ist es notwendig, den Überzugsmassen Fotoinitiatoren hinzuzufügen.

Als Fotoinitiatoren sind die üblicherweise eingesetzten Verbindungen geeignet, wie sie z.B. in der Monographie von J. Kosar, Light Sensitive Sytems, J. Wiley & Sons, New York, 1965 oder wie sie z.B. in "UV&EB CURING FORMULATION for PRINTING INKS COATING & PAINTS Edited by Dr. R. Holman & Dr. P. Oldring ISBN 0 947798 02 1" oder in der DE-OS 38 15 622 beschrieben werden.

Weiterhin gut geeignet sind Benzoinether wie Benzoinisopropylether, Benzilketale, wie z.B. Benzildimethylketal und Hydroxyalkylphenone` wie z.B. 2-Hydroxy-2-methyl-1-phenylpropan-1-on. Die erwähnten Fotoinitiatoren, die je nach Verwendungszweck der erfindungsgemäßen Massen in Mengen zwischen 0,1 und 10 Gew.-%, vorzugsweise 0,1-5 Gew.-% bezogen auf die Bindemittelkomponente eingesetzt werden, können als einzelne Substanz oder, wegen häufiger vorteilhafter synergistischer Effekte, auch in Kombination miteinander verwendet werden.

Erfolgt die Aushärtung mit Elektronenstrahlen, liegt die angelegte Energie zwischen 50 und 500 KeV.

Zur Erzielung besonderer Effekte können den Bindemitteln anorganische oder organische Pigmente, wie z.B. Titandioxid oder Füllstoffe, wie Talkum, in Mengen von 0-80, vorzugsweise 3-60 Gew.-%, zugesetzt werden.

Ferner können die in der Lackindustrie üblichen organischen Zusatzstoffe, wie Thixotropiermittel, Verlaufsmittel, Entlüftungs- oder Gleitmittel in Mengen bis zu 10 % anwesend sein.

Neben den erfindungsgemäßen Epoxidacrylaten können die Überzugsmassen noch 0-80 Gew.-% anderer polymerisierbarer ungesättigter Bindemittel enthalten, z.B. ungesättigte Polyester oder acrylatmodifizierte Epoxidharze, Polyurethane, Polyester, Harnstoff- oder Melaminharze.

### Beispiel 1

870 Teile EUREPOX® RV-C (handelsüblicher Diglycidylether auf Basis von Cyclohexandimethanol der SCHERING AG, Epoxidgehalt: 91,%), 2,5 Teile Hydrochinonmonomethylether und 6 Teile Triphenylphosphin werden unter Durchleiten von Luft auf 90 °C erhitzt und binnen 2h mit 335 Teilen Acrylsäure versetzt. Unter gleichen Bedingungen wird bis zu einer Säurezahl <5 nachgerührt.

Man erhält ein hellgelbes Produkt mit einer Viskosität von 6100 mPas und einem Doppelbindungsgehalt von 9,1 %.

## Patentansprüche

1. Epoxidharz mit (Meth)Acrylgruppen, erhalten durch Umsetzung eines Glycidylethers des 1,4-Cyclohexandimethanols der Formel 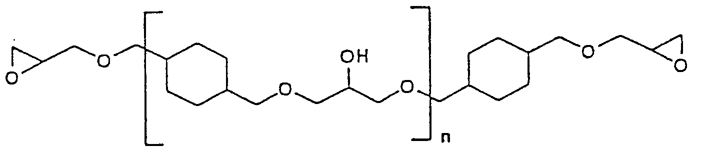 worin n eine Zahl von 0 bis 10 bedeutet, mit Acryl- oder Methacrylsäure, gegebenenfalls zusammen mit einer weiteren Monocarbonsäure.

2. Verfahren zur Herstellung des Epoxidharzes nach Anspruch 1, dadurch gekennzeichnet, daß man eine Verbindung der Formel 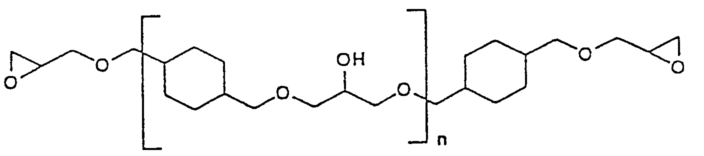 worin n eine Zahl von 0 bis 10 bedeutet, mit Acryl- oder Methacrylsäure umsetzt, sowie gegebenenfalls zusammen mit einer weiteren Monocarbonsäure.

3. Verwendung des Epoxidharzes nach Anspruch 1 zur Herstellung von radikalisch oder durch energiereiche Strahlung härtbaren Beschichtungen oder zur Herstellung von Preßmassen.
